# EUROPEAN PATENT APPLICATION

(11) **EP 3 065 316 A1**
(43) Date of publication of application: **07.09.2016**
(21) Application number: 14858519.3
(22) Date of filing: 28.10.2014
(51) Int. Cl.: H04B 13/00, G06F 1/26

(54) **ELECTRONIC DEVICE**

(30) Priority: 29.10.2013 JP 2013224350
(71) Applicant: Kyocera Corporation, Kyoto-shi, Kyoto 612-8501 (JP)
(72) Inventor: NISHIZAKA Naoki, Kyoto-shi Kyoto 612-8501 (JP); LU, Ting, Kyoto-shi Kyoto 612-8501 (JP)
(74) Representative: Schwabe - Sandmair - Marx
(86) International application number: PCT/JP2014/078674
(87) International publication number: WO 2015/064597

(57) **Abstract**

An electronic device is capable of intra-body communication even when the remaining charge of the battery is less than a predetermined charge. The electronic device is capable of intra-body communication. The electronic device includes a battery and an intra-body communication functional unit that performs intra-body communication. When the electronic device does not activate despite performance of an operation to activate the electronic device, the intra-body communication functional unit performs intra-body communication at a voltage supplied by the battery.

## Description

### TECHNICAL FIELD

This disclosure relates to an electronic device that performs intra-body communication.

### BACKGROUND

An electronic device capable of communication via a human body (intra-body communication) with an intra-body communication interface has been proposed (see JP 2012-191535 A (PTL 1)).

### CITATION LIST

### Patent Literature

PTL 1: JP 2012-191535 A

### SUMMARY

In a typical electronic device, when the voltage of the battery falls to a first voltage at which the functional blocks can no longer operate, the electronic device may become inoperable, without data or settings used in the electronic device being retained. Therefore, in order to avoid a situation in which the electronic device is inoperable, data and settings are retained automatically and the power is turned off when the remaining charge of the battery reaches a second voltage value (predetermined charge) that is higher than the first voltage value.

It would be helpful to provide an electronic device that is capable of intra-body communication even when the remaining charge of the battery reaches a predetermined charge and the power is turned off automatically.

One example of the disclosed electronic device is an electronic device capable of intra-body communication, including: a battery; and an intra-body communication functional unit configured to perform intra-body communication; such that when the electronic device does not activate despite performance of an operation to activate the electronic device, the intra-body communication functional unit performs intra-body communication at a voltage supplied by the battery.

In the electronic device, the intra-body communication functional unit may operate at a voltage value lower than a voltage value at which the electronic device activates.

The electronic device may further include a booster that is disposed between the battery and the intra-body communication functional unit and that boosts the voltage supplied by the battery.

In the electronic device, the booster may be configured to connect to the battery and to the intra-body communication functional unit and supply boosted voltage to the intra-body communication functional unit only when the intra-body communication functional unit transmits a signal.

In the electronic device, the intra-body communication functional unit may include: a controller for intra-body communication; a storage for intra-body communication connected to the controller; and a communication interface for intra-body communication that is controlled by the controller and is capable of transmitting data stored in the storage, and the booster may supply boosted voltage only to the communication interface.

One example of the disclosed electronic device is an electronic device capable of intra-body communication, including: a battery; a main controller that is provided with voltage from the battery and activates the electronic device; and an intra-body communication functional unit configured to perform intra-body communication; such that when the main controller does not operate due to reduction of a remaining charge of the battery, the intra-body communication functional unit performs intra-body communication at a voltage supplied by the battery.

In the electronic device, the intra-body communication functional unit may operate at a voltage value lower than a minimum voltage value at which the main controller is capable of operating.

According to this disclosure, an electronic device that is capable of intra-body communication even when the remaining charge of the battery reaches a predetermined charge and the power is turned off automatically can be provided.

### BRIEF DESCRIPTION OF THE DRAWINGS

In the accompanying drawings:
FIG. 1 is a block diagram illustrating an electronic device according to an embodiment;
FIG. 2 is a block diagram illustrating a detailed first example of an electronic device according to an embodiment;
FIG. 3 is a block diagram of an electronic device according to a first modification to the detailed first example;
FIG. 4 is a block diagram of an electronic device according to a second modification to the detailed first example;
FIG. 5 is a block diagram illustrating a detailed second example of an electronic device according to an embodiment;
FIG. 6 is a block diagram illustrating a first modification to the detailed second example;
FIG. 7 is a block diagram illustrating a second modification to the detailed second example;
FIG. 8 is a block diagram illustrating a third modification to the detailed second example; and
FIG. 9 is a flowchart illustrating operation of an electronic device according to an embodiment.

### DETAILED DESCRIPTION

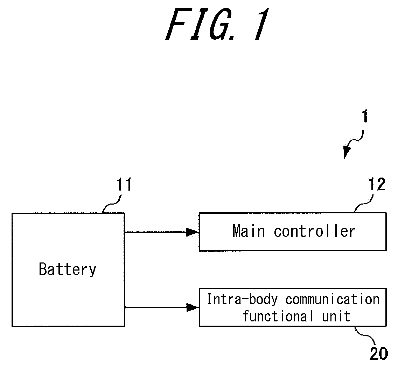

The following describes embodiments of the disclosed electronic device. FIG. 1 is a block diagram illustrating an electronic device 1 according to an embodiment.

The electronic device 1 is capable of intra-body communication. In other words, the electronic device 1 performs communication through a human body. The electronic device 1 includes a battery 11 and an intra-body communication functional unit 20. The battery 11 is, for example, a secondary battery or the like.

When the remaining charge of the battery is at least a predetermined charge, the intra-body communication functional unit 20 performs intra-body communication with the voltage supplied by the battery 11.

Furthermore, the intra-body communication functional unit 20 also performs intra-body communication with the voltage supplied by the battery 11 in case one and case two described below. Case one is the case in which the remaining charge of the battery 11 is less than a predetermined charge, and despite the user performing an operation to activate the electronic device 1, the electronic device 1 is not activated by a main controller 12. Case two is the case in which the below-described main controller 12 does not operate at the voltage supplied by the battery 11 due to the remaining charge of the battery 11 falling below a predetermined charge. The main controller 12 is supplied with voltage by the battery 11. The main controller 12 activates the electronic device 1 when the remaining charge of the battery 11 is at least a predetermined charge and an operation to active the electronic device 1 has been received. When the remaining charge of the battery 11 is less than a predetermined charge, the electronic device does not activate.

An operation to activate the electronic device 1 is, for example, operation of a power-on button (not illustrated) to turn power on to the electronic device 1. Upon the user operating the power-on button, the electronic device 1 activates. In other words, upon the user operating the power-on button, the main controller 12 activates the electronic device 1.

The predetermined charge is a voltage level that acts as a threshold for when power is shut off by software stored on the electronic device 1. When the remaining charge of the battery 11 falls below the predetermined charge, the software shuts off power to the electronic device 1 in order to protect the battery 11. In other words, the software does not activate power when the remaining charge of the battery 11 falls below than the predetermined charge. The predetermined charge is greater than a first voltage value. The first voltage value is the highest voltage value among minimum voltage values at which the functional blocks supplied with power by the battery 11 can operate.

The intra-body communication functional unit 20 operates at a voltage value lower than a voltage value at which activation processing is performed. The intra-body communication functional unit 20 also operates at a voltage value lower than the minimum voltage value at which the main controller 12 is capable of operating. In other words, the intra-body communication functional unit 20 operates even when the remaining charge of the battery 11 is less than the predetermined charge but is higher than the first voltage value.

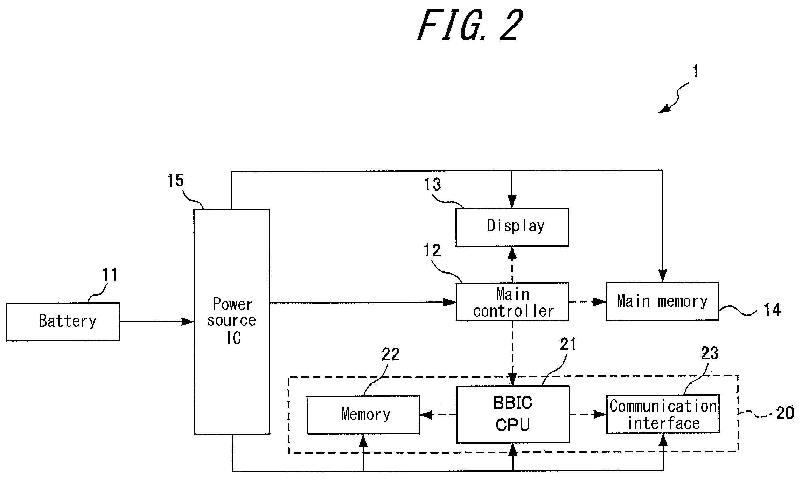

The following describes the electronic device 1 in detail. A detailed first example is first described. FIG. 2 is a block diagram illustrating a detailed first example of the electronic device 1.

The electronic device 1 includes the main controller 12, a display 13, a main memory 14, a power source IC 15, and the intra-body communication functional unit 20. The main controller 12 controls the electronic device 1 overall. When the remaining charge of the battery 11 falls below the predetermined charge, the main controller 12 suspends operation of the display 13 and the main memory 14 and also suspends its own operation (operation of the main controller 12).

The display 13 displays images based on control by the main controller 12.

The main memory 14 stores applications and data used on the electronic device 1.

The power source IC 15 for example converts the output voltage value of the battery 11 to a predetermined voltage value and supplies the result to each part of the electronic device 1.

The intra-body communication functional unit 20 includes a CPU 21 for intra-body communication, a memory 22 for intra-body communication, and a communication interface 23 for intra-body communication. The CPU 21 for intra-body communication corresponds to an embodiment of the "controller" of this disclosure. The memory 22 corresponds to an embodiment of the "storage" of this disclosure.

In the case illustrated in FIG. 2, the CPU 21 includes a baseband IC (BBIC). The CPU 21 operates when intra-body communication is performed. The CPU 21 controls the memory 22 and the communication interface 23.

The memory 22 is connected to the CPU 21. The memory 22 stores data transmitted by intra-body communication and the like.

The communication interface 23 is controlled by the CPU 21 and can transmit data stored in the memory 22. The communication interface 23 includes a Radio Frequency Integrated Circuit (RFIC) (not illustrated) and an antenna (not illustrated).

Even if the remaining charge of the battery 11 is less than the predetermined charge, the CPU 21, the memory 22, and the communication interface 23 all operate when the remaining charge of the battery 11 is higher than the first voltage value.

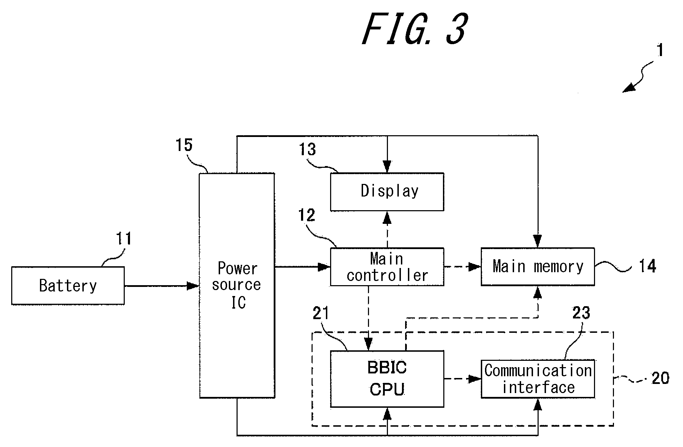

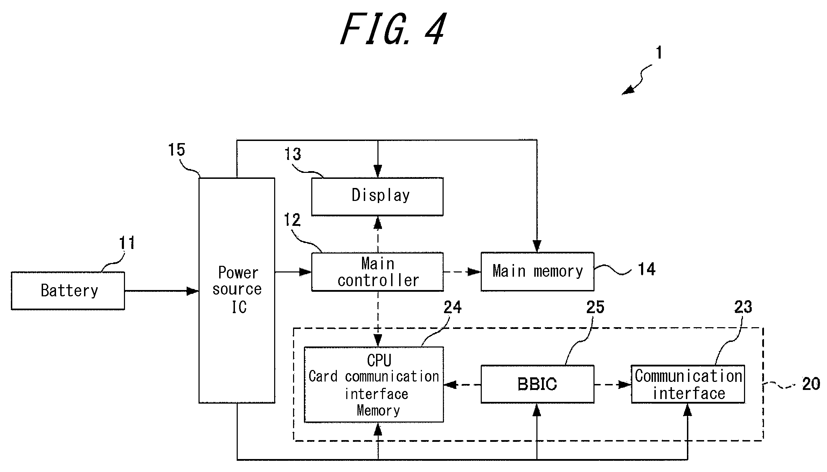

The electronic device 1 is not limited to the structure illustrated in FIG. 2. For example, the electronic device 1 may have the structure illustrated in FIG. 3 or FIG. 4. FIG. 3 is a block diagram of the electronic device 1 according to a first modification to the detailed first example. FIG. 4 is a block diagram of the electronic device 1 according to a second modification to the detailed first example.

As illustrated in FIG. 3, the memory for intra-body communication may also serve as the main memory 14. The main memory 14 stores data transmitted by intra-body communication and the like. In the structure illustrated in FIG. 3, even when the remaining charge of the battery 11 is less than the predetermined charge, the main memory 14 operates when the remaining charge of the battery 11 is higher than the first voltage value. In this case, when the remaining charge of the battery 11 falls below the predetermined charge, the main controller 12 suspends operation of the display 13 and also suspends its own operation (operation of the main controller 12). On the other hand, since the CPU 21 operates at low power, the CPU 21 reads data from the main memory 14 and transmits the data via the communication interface 23 when performing intra-body communication.

In the electronic device 1 illustrated in FIG. 4, the CPU is formed integrally with a memory and a card communication interface. The CPU, memory, and card communication interface are labelled "24". In the electronic device 1 illustrated in FIG. 4, a BBIC 25 and the communication interface 23 for intra-body communication are provided independently.

The card communication interface 24 performs near field communication. In one example, the card communication interface 24 performs the communication of a Felica® card (Felica is a registered trademark in Japan, other countries, or both). The card communication interface 24 includes an antenna (not illustrated) for near field communication. When performing intra-body communication, the CPU 24 transmits the data stored in the memory 24 via the communication interface 23. When performing near field communication, the CPU 24 transmits the data stored in the memory 24 via the card communication interface 24.

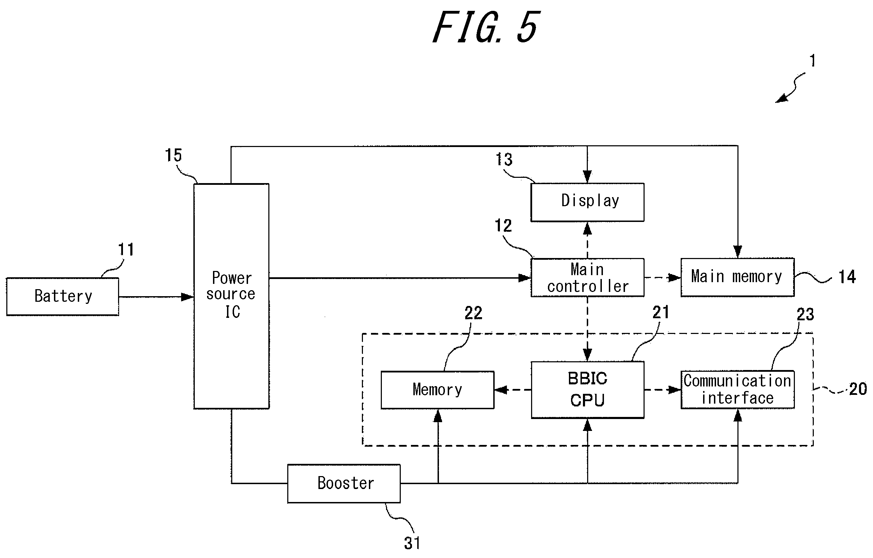

Next, a detailed second example is described. FIG. 5 is a block diagram illustrating a detailed second example of the electronic device 1.

The electronic device 1 includes the main controller 12, display 13, main memory 14, power source IC 15, and intra-body communication functional unit 20. The main controller 12, display 13, main memory 14, power source IC 15, and intra-body communication functional unit 20 each have a similar structure to the corresponding component described in the first example.

The electronic device 1 further includes a booster 31. The booster 31 is disposed between the battery 11 and the intra-body communication functional unit 20. The booster 31 boosts the voltage supplied by the battery 11. In other words, the booster 31 boosts the voltage output by the power source IC 15 and supplies the result to the memory 22, the CPU 21, and the communication interface 23 that constitute the intra-body communication functional unit 20. The booster 31 is, for example, a DC/DC converter.

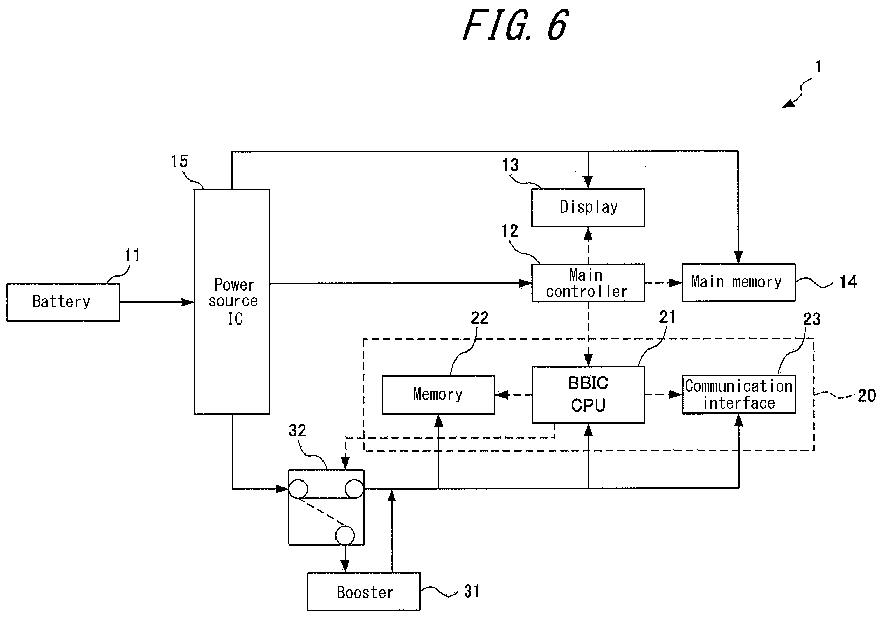

As illustrated in FIG. 6, the booster 31 may also be configured to connect to the battery 11 and the intra-body communication functional unit 20 and supply boosted voltage to the intra-body communication functional unit 20 only when the intra-body communication functional unit 20 transmits a signal (data). FIG. 6 is a block diagram illustrating a first modification to the detailed second example. The electronic device 1 includes a first switch 32. The first switch 32 connects the booster 31 between the power source IC 15 and the intra-body communication functional unit 20 when the electronic device 1 performs intra-body communication. For example, when a received signal is detected in the communication interface 23, the electronic device 1 connects the first switch 32 to the booster 31 by controlling the CPU 21 and applies the boosted voltage to the communication interface 23. As a result, when the electronic device 1 does not perform intra-body communication, dark current does not flow from the power source IC 15 to the intra-body communication functional unit 20. Therefore, the electronic device 1 can reduce power consumption.

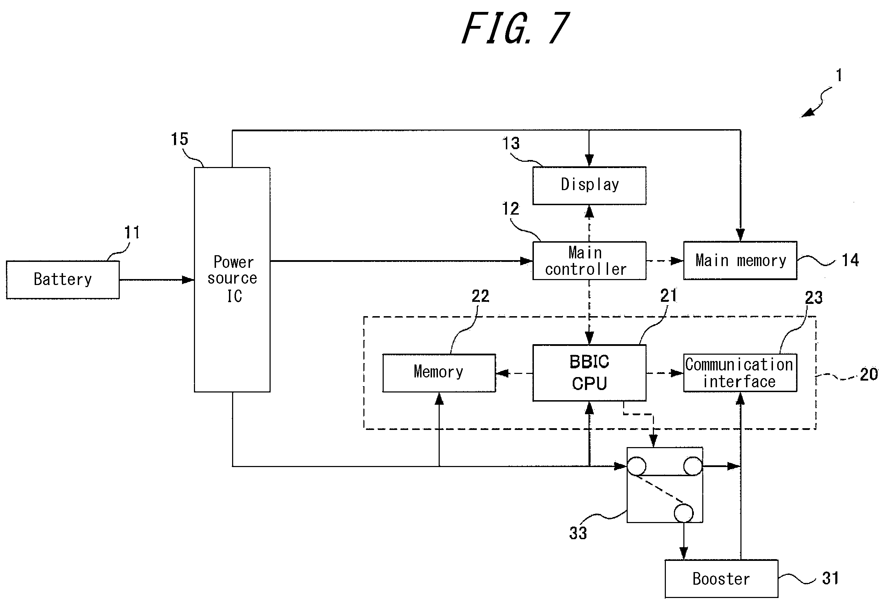

As illustrated in FIG. 7, the booster 31 may be configured to supply boosted voltage only to the communication interface 23. FIG. 7 is a block diagram illustrating a second modification to the detailed second example. The electronic device 1 includes a second switch 33. The second switch 33 is connected between the power source IC 15 and the communication interface 23. The second switch 33 connects the booster 31 between the power source IC 15 and the communication interface 23 by control of the CPU 21 when the electronic device 1 performs intra-body communication. Voltage is applied directly to the memory 22 and the CPU 21 from the power source IC 15. As a result, the electronic device 1 can reduce power consumption as compared to the case illustrated in FIG. 6.

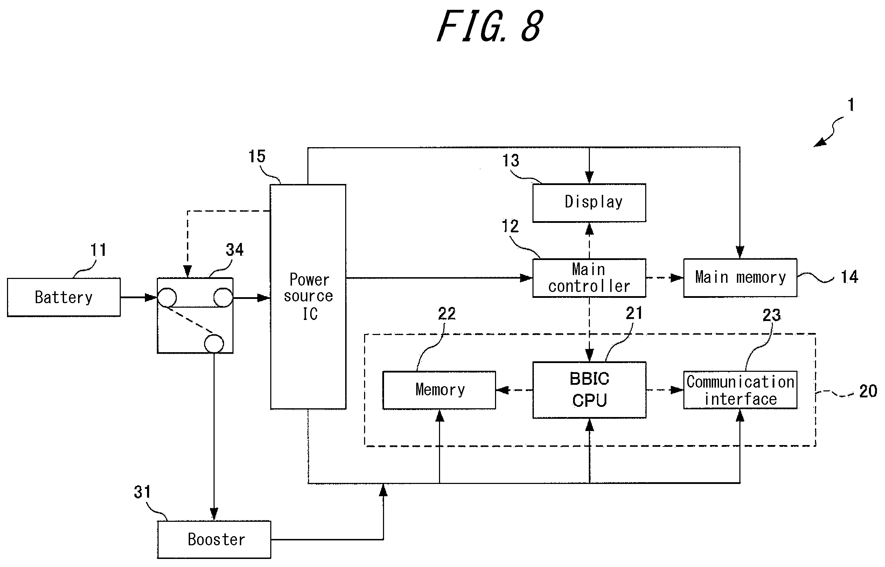

As illustrated in FIG. 8, the booster 31 may also be configured to connect to the battery 11 and the intra-body communication functional unit 20 and supply boosted voltage to the intra-body communication functional unit 20 when the remaining charge of the battery 11 falls below the predetermined charge. FIG. 8 is a block diagram illustrating a third modification to the detailed second example. The electronic device 1 includes a third switch 34. The third switch 34 connects the booster 31 between the power source IC 15 and the intra-body communication functional unit 20 by control of the power source IC 15 when the remaining charge of the battery 11 falls below the predetermined charge. As a result, when the remaining charge of the battery 11 falls below the predetermined charge, voltage output by the battery 11 is supplied to the intra-body communication functional unit 20 without passing through the power source IC 15. With this structure as well, the electronic device 1 is capable of intra-body communication.

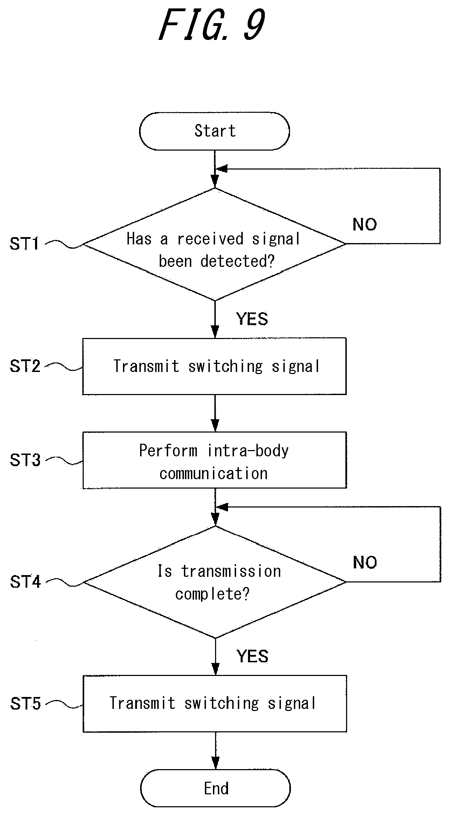

Next, operation of the electronic device 1 for the cases in FIG. 6 or FIG. 7 is described. FIG. 9 is a flowchart illustrating operation of the electronic device 1.

In step ST1, the CPU 21 judges whether a received signal has been detected with the communication interface 23. Furthermore, the CPU 21 judges whether the remaining charge of the battery 11 is less than the predetermined charge. When the remaining charge of the battery 11 is less than the predetermined charge and the communication interface 23 has detected a received signal (YES), processing by the CPU 21 proceeds to step ST2. When the communication interface 23 has not detected a received signal (NO), the CPU 21 repeats the judgment in step ST1.

When the remaining charge of the battery 11 is at least the predetermined charge, processing by the CPU 21 does not proceed to step ST2 even when the communication interface 23 detects a received signal. In other words, when the remaining charge of the battery 11 is at least the predetermined charge, voltage is supplied to the intra-body communication functional unit 20 without passing through the booster 31.

In step ST2, the CPU 21 transmits a switching signal to the switch (the first switch 32 or the second switch 33). The switching signal in step ST2 is a signal for connecting the battery 11 and the booster 31.

In step ST3, the CPU 21 performs intra-body communication.

In step ST4, the CPU 21 judges whether transmission of data stored in the memory 22 is complete. When transmission is complete (YES), processing by the CPU 21 proceeds to step ST5. When transmission is not complete (NO), the CPU 21 repeats the judgment in step ST4.

In step ST5, the CPU 21 transmits a switching signal to the switch (the first switch 32 or the second switch 33). The switching signal in step ST5 is a signal for disconnecting the battery 11 from the booster 31.

As described above, the electronic device 1 performs intra-body communication at a voltage supplied by the battery 11 when the remaining charge of the battery 11 falls below a predetermined charge at which the electronic device 1 does not activate. At the same time, when the main controller 12 does not operate due to reduction of the remaining charge of the battery 11, intra-body communication is performed at the voltage supplied by the battery 11. As a result, the electronic device 1 can perform intra-body communication even when the voltage of the battery 11 has fallen below a predetermined voltage at which the electronic device can be activated (a voltage corresponding to the predetermined charge).

In the electronic device 1, the intra-body communication functional unit 20 operates at a voltage value lower than a voltage value at which activation processing is performed. In other words, in the electronic device 1, the intra-body communication functional unit 20 operates at a voltage value lower than the minimum voltage value at which the main controller 12 is capable of operating. As a result, even when the components of the electronic device 1 are shut off by software, the electronic device 1 is capable of intra-body communication.

The electronic device 1 includes the booster 31. As a result, even when the components of the electronic device 1 are shut off by software, the intra-body communication functional unit 20 can operate at the voltage boosted by the booster 31.

In the electronic device 1, the booster 31 connects to the battery 11 and the intra-body communication functional unit 20 and supplies boosted voltage to the intra-body communication functional unit 20 only when the intra-body communication functional unit 20 transmits a signal. As a result, when the electronic device 1 does not perform intra-body communication, dark current does not flow from the power source IC 15 to the intra-body communication functional unit 20. Therefore, the electronic device 1 can reduce power consumption.

In the electronic device 1, the booster 31 supplies boosted voltage only to the communication interface 23. As a result, the electronic device 1 can further suppress power consumption.

This application claims priority to and the benefit of Japanese Patent Application No. 2013-224350 filed October 29, 2013, the entire contents of which are incorporated herein by reference.

### REFERENCE SIGNS LIST

- 1: Electronic device
- 11: Battery
- 12: Main controller
- 20: Intra-body communication functional unit
- 21: CPU (controller)
- 22: Memory (storage)
- 23: Communication interface
- 31: Booster

## Claims

1. An electronic device capable of intra-body communication, comprising:
a battery; and
an intra-body communication functional unit configured to perform intra-body communication;
wherein when the electronic device does not activate despite performance of an operation to activate the electronic device, the intra-body communication functional unit performs intra-body communication at a voltage supplied by the battery.

2. The electronic device of claim 1, wherein the intra-body communication functional unit operates at a voltage value lower than a voltage value at which the electronic device activates.

3. The electronic device of claim 1, further comprising a booster that is disposed between the battery and the intra-body communication functional unit and that boosts the voltage supplied by the battery.

4. The electronic device of claim 3, wherein the booster connects to the battery and to the intra-body communication functional unit and supplies boosted voltage to the intra-body communication functional unit only when the intra-body communication functional unit transmits a signal.

5. The electronic device of claim 3, wherein
the intra-body communication functional unit comprises:
a controller for intra-body communication;
a storage for intra-body communication connected to the controller; and
a communication interface for intra-body communication that is controlled by the controller and is capable of transmitting data stored in the storage, and
the booster supplies boosted voltage only to the communication interface.

6. An electronic device capable of intra-body communication, comprising:
a battery;
a main controller that is provided with voltage from the battery and activates the electronic device; and
an intra-body communication functional unit configured to perform intra-body communication;
wherein when the main controller does not operate due to reduction of a remaining charge of the battery, the intra-body communication functional unit performs intra-body communication at a voltage supplied by the battery.

7. The electronic device of claim 6, wherein the intra-body communication functional unit operates at a voltage value lower than a minimum voltage value at which the main controller is capable of operating.
